# EUROPÄISCHE PATENTSCHRIFT

(11) **EP 2 369 316 B1**
(45) Veröffentlichungstag und Bekanntmachung des Hinweises auf die Patenterteilung: **10.12.2014**
(21) Anmeldenummer: 11001403.2
(22) Anmeldetag: 21.02.2011
(51) Int. Cl.: G01L 1/22

(54) **Kraftmessbolzen**
Load measuring bolt
Boulon de mesure de force

(30) Priorität: 22.03.2010 DE 102010012361
(43) Veröffentlichungstag der Anmeldung: 28.09.2011
(73) Patentinhaber: Hottinger Baldwin Messtechnik GmbH, 64293 Darmstadt (DE)
(72) Erfinder: Schuster, Hans, 64347 Griesheim (DE); Jauch, Christian, 64331 Weiterstadt (DE)
(74) Vertreter: Staudte, Ralph

(56) Entgegenhaltungen:
- DE-A1- 2 518 548
- DE-A1-102006 047 392
- DE-C1- 3 500 891
- US-A- 4 364 279

## Beschreibung

Die Erfindung betrifft einen Kraftmessbolzen gemäß dem Oberbegriff des Patentanspruchs 1.

Derartige Kraftmessbolzen werden in der industriellen Messtechnik überall eingesetzt, wo an einer Achse oder einem Bolzen quer zu dessen Längsrichtung Kräfte oder Lasten gemessen werden sollen.

So ist aus der DE 35 00 891 C1 ein Messbolzen bekannt, der über eine schwenkbare Stange eine Last auf zwei Stützwände überträgt. Von einer Stirnseite des Bolzens ist dabei eine Aussparung eingefräst, die aus mindestens zwei planen Messflächen besteht, die parallel zur Lastrichtung des Bolzens verlaufen und symmetrisch zu einer neutralen Faser angeordnet sind. Auf diesen ebenen Flächen der Aussparung sind gegenüberliegend Dehnungsmessstreifen appliziert, die die Schubspannung bei einer Belastung des Messbolzens in Querrichtung erfassen. Dieser Messbolzen arbeitet nach dem Scherkraft-Messprinzip, erfordert aber wegen seines innen abgeflachten Verformungskörpers der die Messrichtung bestimmt, eine aufwendige Verdrehhilfe, mit der der Bolzen stets in Lastrichtung verdreht wird.

Aus der DE 33 40 438 C2 ist eine Messanordnung für Kraftmessungen an einem Auflager eines Wägeobjektes bekannt. Diese Messanordnung enthält ebenfalls einen Kraftmessbolzen, der quer zur Längsachse und symmetrisch zu einem Mittelteil mindestens zwei durchgängige Bohrungen enthält, an deren Innenwandflächen gegenüberliegend Dehnungsmessstreifen appliziert sind, mit denen eine Belastung des Kraftmessbolzens erfassbar ist. Da dieser Kraftmessbolzen zwischen einer Gabel und einem zangenartigen Lagerbock drehbar gelagert ist, können damit auch Gewichtskräfte gemessen werden, die nicht vertikal ausgerichtet sind, was dann allerdings zu einem Winkelfehler führt.

Ein weiterer Kraftmessbolzen ist aus der DE 25 18 548 C3 bekannt, der insbesondere zur Trossenkraftmessung für Schiffe vorgesehen ist. Dieser Kraftmessbolzen ist zwischen einer Trossenhalterung und einem Trossenhaken in Zugrichtung drehbar angeordnet. Dabei ist der Kraftmessbolzen als einteiliger Rundstab ausgebildet, an dessen Mittelteil die Trossenhalterung und an dessen angrenzenden Endbereichen der Trossenhaken drehbar gelagert ist. Zwischen diesen beiden Lagerstellen ist durch einen rechteckigen Abschnitt einer umlaufenden Nut ein Verformungsbereich geschaffen, bei dem zwei gegenüberliegende Flächenabschnitte plan abgeflacht sind. An diesen gegenüberliegenden planen Oberflächenabschnitten sind gegenüberliegend insgesamt acht Dehnungsmessstreifen als Scherkraftaufnehmer appliziert. Bei einer Trossenbelastung richtet sich der Kraftmessbolzen entsprechend der Zugrichtung aus und erfasst diese durch die vorgesehenen Scherkraftaufnehmer. Allerdings entsteht bei dem vorbekannten Messbolzen ein Messfehler, wenn die rechteckigen Verformungsbereiche nicht stets in Messrichtung ausgerichtet sind.

Aus der US 4,364,279 ist ein weiterer Kraftmessbolzen bekannt, der als einteiliger Rundbolzen ausgebildet ist. Bei diesem Kraftmessbolzen sind axial zwischen den drei Lagerstellen quer zur Längsrichtung gegenüberliegend vier taschenförmige Aussparungen vorgesehen, die innen parallele plane Flächenabschnitte als Verformungskörper bilden, die eine Längswand darstellen. An dieser Längswand sind jeweils zwei gegenüberliegende Scherkraftaufnehmer angeordnet, so dass mit einem derartigen Kraftmessbolzen eine lineare Kraftbelastung erfassbar ist. Zur lastrichtigen Ausrichtung des Kraftmessbolzens sind in Richtung der Verformungskörper Gewindebohrungen vorgesehen, wodurch die Krafteinleitungs- und Kraftaufnahmeelemente am Kraftmessbolzen fixiert sind, wodurch eine Verdrehung nicht mehr möglich ist.

Ein weiterer Kraftmessbolzen ist aus der DE 10 2006 047 392 bekannt.

Der Erfindung liegt deshalb die Aufgabe zugrunde, einen Kraftmessbolzen der eingangs genannten Art so zu verbessern, dass er ohne eine Verdrehsicherung eine relativ genaue Kraftmessung ermöglicht, und dies auch wenn die Krafteinleitungsrichtung von der Kraftaufnahmerichtung abweicht.

Diese Aufgabe wird durch die im Patentanspruch 1 angegebene Erfindung gelöst. Weiterbildungen und vorteilhafte Ausführungsbeispiele der Erfindung sind in den abhängigen Ansprüchen angegeben.

Die Erfindung hat den Vorteil, dass durch das Querschnittsprofil der Lagerabschnitte mit den drei symmetrisch verteilten Erhebungen stets die Querbelastung genau erfassbar ist, und zwar unabhängig von der Drehstellung des Kraftmessbolzens. Deshalb erfordert ein derartiger Kraftmessbolzen vorteilhafterweise auch keine zusätzliche Verdrehsicherung, um eine Querkraft in linearer Richtung zu messen, die unabhängig vom Winkel zu den Taschen ist.

Die Erfindung hat weiterhin den Vorteil, dass durch die in den Taschen angeordneten Dehnungsmessstreifen die empfindlichen elektrischen Messelemente hermetisch dicht verschließbar sind, so dass der Kraftmessbolzen auch bei ungünstigen Umgebungsbedingungen einsetzbar ist. Durch die in den Lagerabschnitten angeordneten Taschen ist vorteilhaft, dass die Lagerabschnitte gleichzeitig sowohl zur Krafteinleitung oder zur Kraftaufnahme genutzt werden können, so dass kein separater axialer Bauraum zwischen den Krafteinleitungselementen und den Kraftaufnahmeelementen notwendig ist, so dass damit sehr kurzbauende kompakte Kraftmessbolzen ausführbar sind.

Durch die zur Längsachse symmetrisch versetzten Taschen im Lagerelement hat die Erfindung den Vorteil, dass auch bei kleinen Nennkräften durch die innen querverstrebten Lagerelemente der Kraftmessbolzen eine verhältnismäßig hohe Bruchlast aufweist, die eine hohe mechanische Sicherheit bietet.

Eine besondere Ausführung der Erfindung mit zwei endseitig angeordneten Lagerelementen hat den Vorteil, dass diese als zweiseitig gelagerter Bolzen sowohl zur Gewichtsmessung in freihängenden Wägeeinrichtungen oder in auf Scherung beanspruchten Maschinenanlagen zur Belastungsmessung verwendbar sind, ohne dass es dabei auf die Drehlage des Kraftmessbolzens ankommt. Dabei sind sowohl die Lagerelemente als auch der Schaft in nahezu runder Bauweise ausführbar, so dass beide Teile vorteilhafterweise in Drehlagern drehbar angeordnet werden können, wobei auch bei einer Verdrehung des Kraftmessbolzens eine genaue Kraftmessung möglich bleibt.

Eine weitere besondere schraubenartige Ausführung der Erfindung hat den Vorteil, dass diese wie eine herkömmliche Schraube in gefahrträchtigen Maschinenbereichen einsetzbar ist, um auf einfache Weise zulässige oder unzulässige Querbelastungen mittels eines Lagerelements zwischen dem Schraubenkopf und dem Gewinde zu erfassen.

Die Erfindung wird anhand eines Ausführungsbeispiels, das in der Zeichnung dargestellt ist, näher erläutert. Es zeigen:
- Fig. 1:: eine Seitenansicht eines Kraftmessbolzens mit einem mittleren Schaft und zwei endseitigen Lagerabschnitten in Teilschnittdarstellung;
- Fig. 2:: eine Schnittdarstellung als Vorderansicht auf einen Lagerabschnitt;
- Fig. 3:: einen vergrößert dargestellten Ausschnitt A als Vorderansicht mit einer Tasche und gegenüberliegender Erhebung;
- Fig. 4:: eine schematische Darstellung der Vorderansicht eines Kraftmessbolzens mit einem Lagerring und Krafteinleitungs- und Kraftaufnahme-Vektoren;
- Fig. 5:: einen schraubenartigen Kraftmessbolzen mit einem Schaft und einem endseitigen Lagerabschnitt; und
- Fig. 6:: eine Schnittdarstellung des schraubenartigen Kraftmessbolzens.

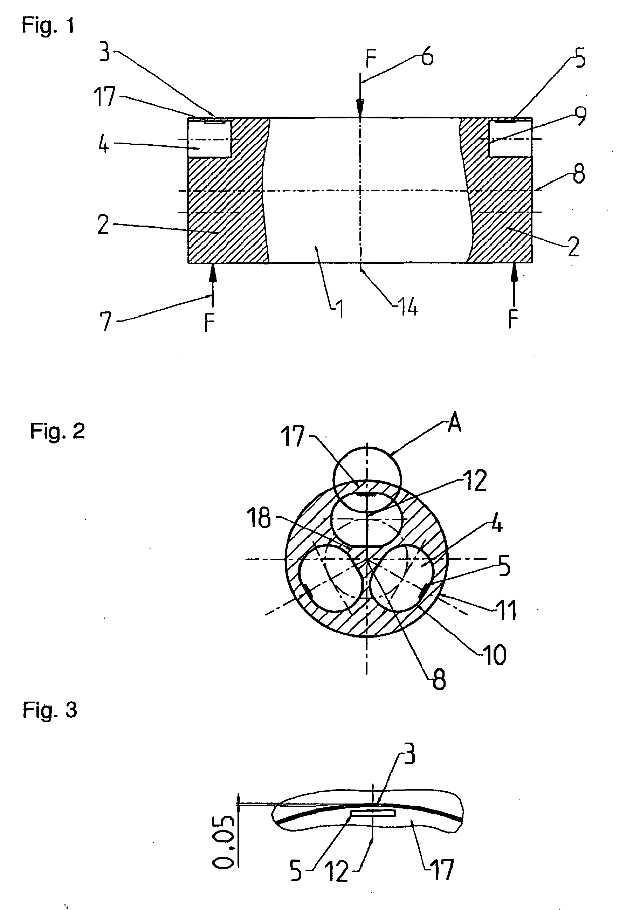

In Fig. 1 der Zeichnung ist ein Kraftmessbolzen mit einem mittleren Schaft 1 und zwei endseitigen Lagerabschnitten 2 dargestellt, wobei jeder Lagerabschnitt 2 am Außenumfang jeweils um 120° versetzte leichte Erhebungen 3 aufweist und im Inneren jedes Lagerabschnitts 2 drei um 120° versetzte axiale Taschen 4 mit darin applizierten Dehnungsmessstreifen 5 vorgesehen sind.

Der Lastmessbolzen besteht vorzugsweise aus einem monolithischen Rundbolzen, der zur Messung einer quer einleitbaren Kraft F vorgesehen ist, wie dies mit dem Krafteinleitungspfeil 6 am mittleren Schaft 1 und den beiden Kraftaufnahmepfeilen 7 an den Lagerabschnitten 2 dargestellt ist. Ein derartiger Kraftmessbolzen besteht vorzugsweise aus einem legierten Edelstahl, Titan oder Aluminium.

Der zwischen den beiden Lagerabschnitten 2 angeordnete mittlere Schaft 1 besitzt vorzugsweise einen runden Querschnitt, kann aber auch eckig ausgebildet sein. Dabei dient der mittlere Schaft 1 vorzugsweise zur vertikalen Krafteinleitung, so dass der Kraftmessbolzen auch zur Wägung verwendbar ist. Der Schaft 1 kann aber auch zur Kraftaufnahme dienen, wenn die zu erfassende Kraft F in den Lagerabschnitten 2 eingeleitet wird. Da ein derartiger Kraftmessbolzen vorzugsweise für kleinere Kraftmessungen von 10 bis 1.000 N eingesetzt wird, sind dafür Durchmesser von 10 bis 50 mm und Längen von 10 bis 100 mm vorgesehen. Für größere Kraftmessungen können aber auch Kraftmessbolzen mit größeren Abmessungen vorgesehen werden.

Die sich axial zum Schaft 1 anschließenden Lagerabschnitte 2 dienen vorzugsweise zur Lagerung des Kraftmessbolzens und damit zur Kraftaufnahme. Die Lagerabschnitte 2 an den beiden Endbereichen des Kraftmessbolzens sind gleichartig und symmetrisch zur Längsachse 8 des Kraftmessbolzens ausgebildet. Diese beiden Lagerabschnitte 2 enthalten jeweils drei Taschen 4, die den Lagerabschnitt 2 in Längsrichtung linear bis zum Schaft 1 durchdringen und wie Sackbohrungen mit einer Spitze oder einer ebenen Abschlussfläche 9 vor dem Schaft 1 enden.

Die Ausbildung der Lagerabschnitte 2 ist im Einzelnen aus der Schnittdarstellung in Fig. 2 und 3 der Zeichnung ersichtlich, die gegenüber der Seitendarstellung einen vergrößerten Maßstab aufweist. Dabei bestehen die Lagerabschnitte 2 aus einem Vollmaterial, in das im Innenbereich und symmetrisch zur Längsachse 8 drei um 120° versetzte Taschen 4 axial eingelassen sind. Die Taschen 4 haben vorzugsweise einen nierenartigen Querschnitt, dessen innere Mantelfläche 10 im Bereich des Außenumfangs des Kraftmessbolzens abgeflacht ist und damit nahezu parallel zur äußeren Mantelfläche 11 der Lagerabschnitte 2 verläuft. Die Taschen 4 könnten aber auch als Rundbohrungen oder mit eckigen Querschnitten ausgebildet sein, was aber die Linearität der Messung beeinträchtigen kann. An den Flachstellen sind an der inneren Mantelfläche 10 gegenüber der äußeren Mantelfläche 11 der Lagerabschnitte 2 in Längsrichtung Dehnungsmessstreifen 5 appliziert, die als Biegespannungsaufnehmer ausgebildet sind. Dabei sind die Dehnungsmessstreifen 5 symmetrisch zur jeweiligen radialen Spiegelachse 12 der Taschenquerschnitte an der inneren Mantelfläche 11 angeordnet.

Die Lagerabschnitte 2 sind an ihrem äußeren Umfang im Wesentlichen rund ausgebildet, besitzen aber ein Querschnittsprofil, an dem gegenüberliegend zu den Dehnungsmessstreifen 5 an der äußeren Mantelfläche 11 leichte abgerundete Erhebungen 3 vorgesehen sind, die ebenfalls um 120° gegeneinander tangential versetzt sind. Diese Erhebungen 3 stellen abgerundete Nocken dar und dienen zur Krafteinleitung oder zur Kraftaufnahme in die Lagerabschnitte 2 durch eine auf die Lagerabschnitte 2 angepasste Lagerhülse 13, die auf den Lagerabschnitten 2 drehbar gelagert sein kann. Dabei reicht bereits bei jedem Lagerabschnitt 2 eine nahezu unsichtbare Erhebung von 5 µm gegenüber einem kreisrunden Querschnitt bis ca. 50 mm Ø aus, um eine richtungsunabhängige Krafteinleitung oder Kraftaufnahme zu erreichen. Dabei stellt der radiale Verbindungsbereich zwischen der inneren Mantelfläche 10 und der äußeren Mantelfläche 11 entlang der axialen Erhebung 3 einen Verformungskörper 17 dar, dessen Dehnung proportional der Kraftbelastung F quer zur Längsachse 8 ist und die durch die Biegespannungsaufnehmer 5 erfasst wird.

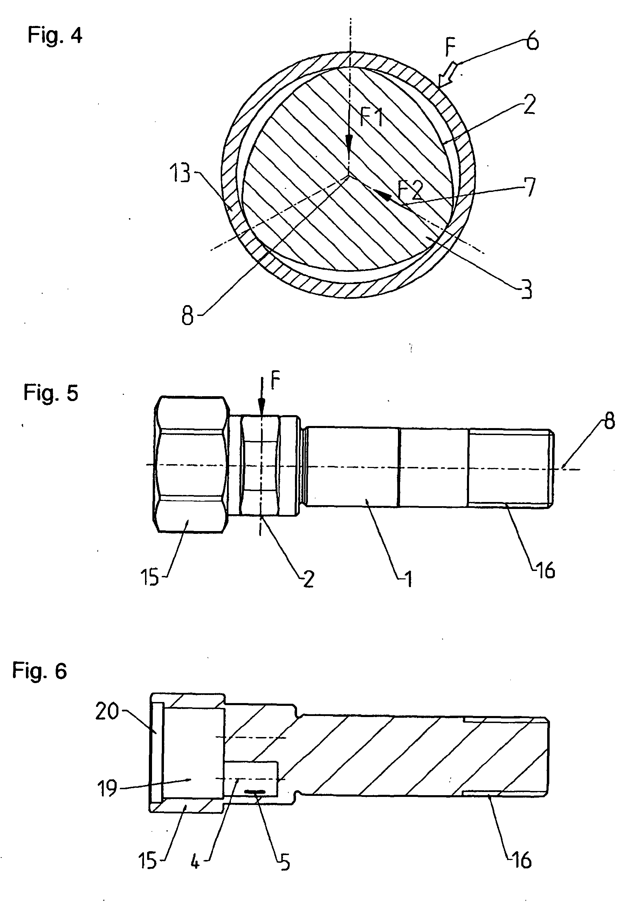

Eine schematische Darstellung des Querschnittsprofils der Lagerabschnitte 2 mit den überzeichnet dargestellten Erhebungen 3 und einem beispielhaften Krafteinleitungspfeil 6 und einem Kraftaufnahmepfeil 7 ist aus Fig. 4 der Zeichnung ersichtlich. Dabei sind die Erhebungen 3 im Prinzip als abgerundete Nocken in einem tangentialen Abstand von 120° am nahezu runden Umfang des Lagerabschnitts 2 angeordnet. Diese Nocken 3 werden nachträglich an den kreisrunden Lagerabschnitt 2 angeschliffen. Die Lagerabschnitte 2 sind dabei vorzugsweise in einer kreisrunden Lagerhülse 13 gelagert, wobei sowohl die Lagerhülse 13 als auch der Kraftmessbolzen drehbar angeordnet sein kann.

Wird nun eine Kraft F aus beliebiger Richtung, zum Beispiel wie in Pfeilrichtung 6 dargestellt, in den mittleren Schaft 1 eingeleitet, so stützen sich stets zwei Lagernocken 3 als Erhebungen auf die stationäre Lagerhülse 13 ab. Dadurch wird über die Lagernocken 3 eine Kraft *F1* und eine Kraft F2 auf die Lagerhülse 13 übertragen, wodurch in den beiden Verformungskörpern 17 entlang der Nocken 3 eine Dehnung entsteht, die durch die beiden entsprechenden Dehnungsmessstreifen 5 erfasst wird. Bei einer vertikalen Krafteinleitung mit der Kraft F entlang der Mittellinie 14 des mittleren Schafts 1 muss in jeden Lagerabschnitt 2 eine Kraft F/2 in Pfeilrichtung 7 aufgenommen werden. Dadurch ergibt sich unabhängig von der Drehlage des Kraftmessbolzens aus der Summe der in den drei Dehnungsmessstreifen 5 eines Lagerabschnittes 2 erfassten Signale die Kraft F/2.

Wird nun ein derartiger Kraftmessbolzen in einem linear ausgerichteten System wie zum Beispiel bei einem Kranhaken eingesetzt, so ergibt die Summe aller sechs Dehnungsmessstreifen stets die eingeleitete Kraft *F*, und zwar unabhängig von der Drehlage des Kraftmessbolzens. Aber auch, wenn eine Krafteinleitungsrichtung von der Kraftaufnahmerichtung abweicht, ist eine Gesamtkraftmessung unabhängig von der Drehlage des Kraftmessbolzens ermittelbar. Hierbei wird durch die beiden Lagerabschnitte 2 als Summe der sechs Dehnungsmessstreifensignale eine Gesamtkraft ermittelt, wie bei einer linearen Krafteinleitung. Durch eine entsprechende Winkelfunktionsrechnung unter Vorgabe der Winkelabweichung lässt sich dann als Resultierende auch eine eingeleitete richtungsabhängige Gesamtkraft auf einfache Weise errechnen.

In Fig. 5 und 6 der Zeichnung ist eine besondere Ausführung eines Kraftmessbolzens dargestellt, der vorzugsweise in einem Stellglied zur Flugsteuerung eines Flugzeugs einsetzbar ist, um sicher den Ausfall eines derartigen Systems zu erfassen. Dazu ist der Kraftmessbolzen als einteilige Schraube ausgebildet, an deren Kopfteil 15 ein sechskantiger Schraubenschlüsselabschnitt vorgesehen ist, dem in axialer Richtung ein abgestufter Rundbolzenabschnitt folgt, der einen Lagerabschnitt 2 und einen Schaft 1 umfasst, an dessen Ende ein Außengewinde 16 angeschnitten ist. Dabei ist der Schraubenkopfabschnitt innen hohl, wobei der Hohlraum 19 symmetrisch zur Längsachse 8 als Zylinderbohrung ausgebildet ist und zusätzlich zur Aufnahme der Messelektronik dient.

Daran schließt sich ein Lagerabschnitt 2 an, der innen drei um 120° tangential versetzte Taschen 4 mit daran applizierten Dehnungsmessstreifen 5 aufweist und außen ein Querschnittsprofil mit drei um 120° tangential versetzte Nocken 3 besitzt, wie dies bereits zum Kraftmessbolzen nach Fig. 1 bis 4 beschrieben ist. Dieser Kraftmessbolzen dient vorzugsweise im Zusammenhang mit einer nicht dargestellten Mutter zur Befestigung eines Jochs in einem Verbindungsteil eines Stellglieds zur Flugsteuerung zu dessen Überwachung. Denn bei einem Bruch innerhalb des Stellglieds wird der Lagerabschnitt 2 mit einer Querkraft F belastet, die unabhängig von der Drehlage der Schraube erfasst wird, und durch die ein Schaden des Stellglieds signalisierbar ist.

Derartige als Schrauben ausgebildete Kraftmessbolzen können aber auch in anderen gefahrgeneigten Maschinenteilen zur Belastungsüberwachung eingesetzt werden. Zur hermetischen Abdichtung kann der Schraubenkopf oder die Endfläche jedes Lagerabschnitts 2 mit einem membranartigen Abdeckblech oder einer Abdeckplatte 20 verschweißt werden. Die Empfindlichkeit des Kraftmessbolzens ist dabei durch die Dicke des Verformungskörpers 17 in weiten Bereichen vorgebbar, der eine Dicke von 0,5 bis 5 mm aufweisen kann. Dadurch verbleiben auch zwischen den Taschen 4 und den äußeren Mantelflächen 11 des Lagerabschnitts 2 wabenartige Querstege 18, die den Lagerabschnitten 2 eine hohe Bruchfestigkeit gewährleisten.

## Patentansprüche

1. Kraftmessbolzen, der in axialer Längsrichtung mindestens einen Schaft (1) zur Kraftaufnahme oder zur Krafteinleitung und daran axial anschließend mindestens einen etwa rundartigen Lagerabschnitt (2) zur Krafteinleitung oder zur Kraftaufnahme enthält, in die die zu messende Kraft (F) quer zur Längsrichtung eingeleitet wird, wobei am rundartigen Lagerabschnitt (2) mehrere Taschen (4) mit darin applizierten Dehnungsmessstreifen (5) vorgesehen sind, **dadurch gekennzeichnet, dass** der rundartige Lagerabschnitt (2) drei um 120° tangential versetzte abgerundete Erhebungen (3) aufweist und dass innen im Lagerabschnitt (2) drei um tangential 120° versetzte Taschen (4) vorgesehen sind, die in Längsrichtung symmetrisch und parallel zu den Erhebungen (3) verlaufen und deren radiale Verbindungsbereiche Verformungskörper (17) bilden, an deren inneren Mantelflächen (10) jeweils mindestens ein Dehnungsmessstreifen (5) als Biegespannungsaufnehmer appliziert ist.

2. Kraftmessbolzen nach Anspruch 1, **dadurch gekennzeichnet, dass** die drei Taschen (4) axial den Lagerabschnitt (2) durchdringen, parallel nebeneinander angeordnet und durch Querstege (18) voneinander getrennt sind und eine ebene quer zur Längsrichtung verlaufende Abschlußfläche (9) aufweisen.

3. Kraftmessbolzen nach Anspruch 1 oder 2, **dadurch gekennzeichnet, dass** die Taschen (4) einen nieren- oder einen ellipsenförmigen Querschnitt aufweisen, wobei die eine abgeflachte innere.Mantelfläche (10) jeder Tasche (4) etwa.parallel zur äußeren Mantelfläche (11) des Kraftmessbolzens verläuft.

4. Kraftmessbolzen nach einem der vorhergehenden Ansprüche, **dadurch gekennzeichnet, dass** die Lagerabschnitte (2) ein nahezu rundes Querschnittsprofil aufweisen, das um 120° um die Längsachse (8) versetzte Nocken (3) als Erhebungen umfasst, die sich mindestens 3 µm bis 3 mm gegenüber einem kreisrunden Querschnitt erheben.

5. Kraftmessbolzen nach einem der vorhergehenden Ansprüche, **dadurch gekennzeichnet, dass** innerhalb der Taschen (4) jeweils an einer radial nach außen gerichteten inneren Mantelfläche (10) mindestens ein Dehnungsmessstreifen (5) symmetrisch zu einer Linie appliziert ist, die eine Spiegelachse (12) des Taschenquerschnitts darstellt, und auf deren gegenüberliegender äußerer Mantelfläche (11) der Nocken (3) angeordnet ist.

6. Kraftmessbolzen nach einem der vorhergehenden Ansprüche, **dadurch gekennzeichnet, dass** der Lagerabschnitt (2) in einer kreisrunden Lagerhülse (13) oder einem kreisrunden Lagerring gelagert ist, deren Innendurchmesser mindestens dem Außendurchmesser des Lagerelements (2) inklusive der Erhebungen (3) entspricht.

7. Kraftmessbolzen nach einem der Ansprüche 1 bis 6, **dadurch gekennzeichnet, dass** dieser monolithisch ausgebildet ist und zwei endseitige Lagerabschnitte (2) umfasst, die durch einen mittleren Schaft (1) verbunden sind, wobei der Schaft (1) einen runden oder eckigen Querschnitt aufweist.

8. Kraftmessbolzen nach einem der Ansprüche 1 bis 6, **dadurch gekennzeichnet, dass** dieser monolithisch ausgebildet ist und in axialer Richtung einen hohlen Kopfteil (15), einen Lagerabschnitt (2) und einen runden Schaft (1) mit einem Außengewinde (16) umfasst.

## Claims

1. A force measurement bolt comprising, in the axial longitudinal direction, at least one shank (1) for absorbing force or for transferring force, and at least one axially adjoining, approximately round-shaped load-bearing portion (2) for transferring force or for absorbing force and into which the force (F) to be measured is introduced transversely to the longitudinal direction, wherein a plurality of pockets (4) having strain gauges (5) applied therein are provided on the round-shaped load-bearing portion (2), **characterised in that** the round-shaped load-bearing portion (2) has three rounded projections (3) tangentially offset from each other by 120° and that three pockets (4) tangentially offset from each other by 120° and extending in the longitudinal direction symmetrically and parallel to the projections (3) are provided in the load-bearing portion (2), the radial connection regions of the pockets forming deformation elements (17), to the inner circumferential surface (10) of each at least one strain gauge (5) is applied as a bending stress measurement element.

2. The force measurement bolt according to claim 1, **characterised in that** the three pockets (4) extend axially through the load-bearing portion (2), are arranged parallel adjacent to each other and are separated from each other by transverse webs (18) and have a flat end surface (9) extending transversely to the longitudinal direction.

3. The force measurement bolt according to claim 1 or 2, **characterised in that** the pockets (4) have a kidney-shaped or elliptical cross-section, the one flattened inner circumferential surface (10) of each pocket (4) extending approximately parallel to the outer circumferential surface (11) of the force measurement bolt.

4. The force measurement bolt according to any one of the preceding claims, **characterised in that** the load-bearing portions (2) have an almost round cross-sectional profile that includes cam lobes (3) offset from each other by 120° about the longitudinal axis (8) as projections which rise at least 3 µm to 3 mm relative to a circular cross-section.

5. The force measurement bolt according to any one of the preceding claims, **characterised in that** at least one strain gauge (5) is applied inside each of the pockets (4) to a radially outwardly located inner circumferential surface (10) and symmetrically with respect to a line representing an axis of reflection (12) of the pocket cross-section, and on the opposite outer circumferential surface (11) from which the cam lobe (3) is disposed.

6. The force measurement bolt according to any one of the preceding claims, **characterised in that** the load-bearing portion (2) is supported in a circular bearing sleeve (13) or in a circular bearing ring, the inner diameter of which is at least equal to the outer diameter of the load-bearing portion (2), including the projections (3).

7. The force measurement bolt according to any one of claims 1 to 6, **characterised in that** said force measurement bolt is monolithic in design and includes at its ends two load-bearing portions (2) connected by a middle shank (1), said shank (1) having a round or polygonal cross-section.

8. The force measurement bolt according to any one of claims 1 to 6, **characterised in that** said force measurement bolt is monolithic in design and includes, in the axial direction, a hollow head portion (15), a load-bearing portion (2) and a round shank (1) with an outer thread (16).

## Revendications

1. Boulon de mesure de force, comprenant, dans la direction longitudinale axiale, au moins un fût (1) de reprise d'effort ou d'introduction d'effort et, liée axialement à celui-ci, au moins une section de palier (2) d'introduction d'effort ou de reprise d'effort de forme quelque peu arrondie, sur lesquels la force (F) à mesurer est appliquée transversalement à la direction longitudinale, la section de palier (2) de forme arrondie étant pourvue de plusieurs poches (4) dotées de jauges extensométriques (5) appliquées à celles-ci, **caractérisé en ce que** la section de palier (2) de forme arrondie comprend trois bossages (3) arrondis décalés tangentiellement de 120° et **en ce qu'**à l'intérieur de la section de palier (2) sont prévues trois poches (4) décalées tangentiellement de 120°, lesquelles s'étendent dans la direction longitudinale symétriquement et parallèlement par rapport aux bossages (3), lesquelles ont des régions radiales de liaison formant des corps de déformation (17), et aux surfaces d'enveloppe internes (10) desquelles est respectivement appliquée au moins une jauge extensométrique (5) en tant que capteur de force de flexion.

2. Boulon de mesure de force selon la revendication 1, **caractérisé en ce que** les trois poches (4) traversent axialement la section de palier (2), sont disposées parallèlement l'une à côté de l'autre, sont séparées entre elles par une entretoise (18) et ont une surface de fermeture (9) plane qui s'étend transversalement par rapport à la direction longitudinale.

3. Boulon de mesure de force selon la revendication 1 ou 2, **caractérisé en ce que** les poches (4) ont une section transversale réniforme ou en forme d'ellipse, dans lequel la dite surface d'enveloppe interne (10) aplatie de chaque poche (4) s'étend à peu près parallèlement à la surface d'enveloppe externe (11) du boulon de mesure de force.

4. Boulon de mesure de force selon l'une quelconque des revendications précédentes, **caractérisé en ce que** les sections de palier (2) ont un profil de section transversale presque rond qui comprend, en tant que bossages, des saillies (3) décalées de 120° autour de l'axe longitudinal (8) et s'élevant entre au moins 3 µm et 3 mm par rapport à une section transversale circulaire.

5. Boulon de mesure de force selon l'une quelconque des revendications précédentes, **caractérisé en ce qu'**à l'intérieur des poches (4), au moins une jauge extensométrique (5) est appliquée, d'une manière symétrique par rapport à une ligne représentant un axe de symétrie (12) de la section transversale d'une poche, respectivement à une surface d'enveloppe interne (10) orientée radialement vers l'extérieur, et la saillie (3) est disposée sur la surface d'enveloppe externe (11) en face de celles-ci.

6. Boulon de mesure de force selon l'une quelconque des revendications précédentes, **caractérisé en ce que** la section de palier (2) est logée dans un manchon de palier (13) circulaire ou dans un anneau de palier circulaire, dont le diamètre intérieur correspond au moins au diamètre extérieur de l'élément de palier (2), bossages (3) compris.

7. Boulon de mesure de force selon l'une quelconque des revendications 1 à 6, **caractérisé en ce que** celui-ci est formé de manière monolithique et comprend deux sections de palier (2) d'extrémité qui sont liées par un fût (1) central, le fût (1) ayant une section transversale ronde ou angulaire.

8. Boulon de mesure de force selon l'une quelconque des revendications 1 à 6, **caractérisé en ce que** celui-ci est formé de manière monolithique et comprend, dans la direction axiale, une partie de tête (15) creuse, une section de palier (2) et un fût (1) rond doté d'un filetage extérieur (16).
